Europäisches Patentamt

European Patent Office

Office européen des brevets

(11) Veröffentlichungsnummer: **0 340 627**

**A2**

(12) **EUROPÄISCHE PATENTANMELDUNG**

(21) Anmeldenummer: **89107611.9**

(22) Anmeldetag: **27.04.89**

(51) Int. Cl.4: **G05B 19/39**

(30) Priorität: **02.05.88 DE 3814810**

(43) Veröffentlichungstag der Anmeldung:
**08.11.89 Patentblatt 89/45**

(84) Benannte Vertragsstaaten:
**CH DE FR GB IT LI SE**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Gauggel, Roland**
**Waldstrasse 15**
**D-7777 Salem-Grasbeuren(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Stellantrieb zum Einstellen eines drehbeweglichen Elements.**

㊗ Ein drehbewegliches Element (10), beispielsweise ein Roboterarm, soll durch einen Stellantrieb auf eine durch ein Sollwertsignal vorgegebene Stellung eingestellt werden. Ein Winkelabgriff (20) liefert ein Istwertsignal. Ein erster Regler (36) liefert über einen adaptiven Begrenzer ein erstes Stellsignal. Das erste Stellsignal ist auf einen ersten Momentengeber (18) geschaltet, dessen Rotor unmittelbar mit dem drehbeweglichen Element (10) verbunden ist. Ein zweiter Regler (38) liefert ein zweites Stellsignal, das auf einen zweiten Momentengeber (22) geschaltet ist. Der zweite Momentengeber (22) ist mit dem drehbeweglichen Element (10) über ein Untersetzungsgetriebe (26) und ein federelastisches Koppelglied (30) verbunden. Ein Koppelzweig (40) mit einem Integrator gibt ein vom Eingang des ersten Momentengebers (18) abhängiges Trimmsignal auf den Eingang des zweiten Momentengebers (22). Der zweite Momentengeber (22) bewirkt über das Untersetzungsgetriebe (26) eine Grobregelung unter Last, während der erste Momentengeber (18) eine Feinregelung unabhängig von Getriebereibung und -lose gestattet.

Fig. 2

## Stellantrieb zum Einstellen eines drehbeweglichen Elements

### Technisches Gebiet

Die Erfindung betrifft einen Stellantrieb zum Einstellen eines drehbeweglichen Elements auf eine durch ein Sollwertsignal vorgegebene Stellung.

In der Luft- und Raumfahrt werden hochgenaue Stellantriebe benötigt zur präzisen Stabilisierung, Ausrichtung oder Nachführung von Navigations-Sensoren, Kameras oder Antennensystemen. Eine andere Anwendung von hochgenauen Stellantrieben ist die genaue Positionierung von Robotern.

### Zugrundeliegender Stand der Technik

Bei solchen Stellantrieben ist das zu positionierende Teil auf ein- oder mehrachsigen Rahmensystemen montiert. Die einzelnen Achsen sind mit je einem Stellantrieb versehen. Der Stellantrieb enthält einen Momentengeber und einen Winkelabgriff. Der Momentengeber wird über eine elektronische Regeleinrichtung angesteuert. Der elektronischen Regeleinrichtung wird ein Sollwertsignal zugeführt. Dieses Sollwertsignal gibt die Position vor, die das Element einnehmen soll. Der Momentengeber verdreht das zu positionierende Element so, daß der Winkelabgriff ein der vorgegebenen Position entsprechendes Rückführsignal liefert.

Für die Stellbewegung sind häufig ziemlich große Drehmomente aufzubringen. Diese Drehmomente treten beispielsweise auf, wenn ein Roboterarm eine Last heben oder auch nur halten soll. Drehmomente sind auch während der Stellbewegung infolge der Trägheitsmomente der bewegten Teile zu überwinden.

Es gibt nun Stellantriebe, bei denen das drehbewegliche Element, das positioniert werden soll, unmittelbar mit dem Rotor des Momentengebers verbunden ist. Das gestattet eine sehr genaue Positionierung. Die Positioniergenauigkeit ist im wesentlichen nur durch die Güte des Winkelabgriffs bestimmt.

Um große Drehmomente aufzubringen, ist dabei jedoch ein großer Momentengeber erforderlich, der von einem starken Strom gespeist wird. Solche großen Momentengeber vergrößern das Bauvolumen. Durch die Masse und das Trägheitsmoment des Momentengebers wird wiederum ein höheres Drehmoment zur Verstellung erforderlich.

Ein weiteres Problem, das insbesondere im Dauerbetrieb auftritt, ist die Erwärmung des Systems durch den auf den Momentengeber aufgeschalteten Strom. Eine solche Erwärmung oder eine schnelle Temperaturänderungen wirkt der Forderung nach einer hohen Positioniergenauigkeit entgegen.

Es sind daher Stellantriebe bekannt, bei denen der Momentengeber über ein Untersetzungsgetriebe mit dem drehbeweglichen Element verbunden ist. Es können dann kleinere Momentengeber vorgesehen werden. Außerdem kann mit geringeren Strömen gearbeitet werden. Dafür wird aber die Genauigkeit der Positionierung durch Reibung und Lose des Untersetzungsgetriebes vermindert.

### Offenbarung der Erfindung

Der Erfindung liegt die Aufgabe zugrunde, einen Stellantrieb zu schaffen, der bei relativ geringer Baugröße und relativ geringem Strombedarf hohe Drehmomente bei hoher Genauigkeit der Positionierung aufzubringen vermag.

Erfindungsgemäß wird diese Aufgabe gelöst durch die Kombination von

(a) einem Winkelabgriff, der ein die Stellung des drehbeweglichen Elements wiedergebendes Istwertsignal liefert,

(b) einem ersten Regler, auf welchen die Differenz von Istwertsignal und Sollwertsignal als Regelabweichungssignal aufgeschaltet ist und welcher ein erstes Stellsignal liefert,

(c) einem ersten Momentengeber,

-- dessen Rotor unmittelbar mit dem drehbeweglichen Element verbunden ist und

-- der von dem ersten Stellsignal des ersten Reglers beaufschlagt ist,

(d) einem zweiten Regler, auf welchen die Differenz von Istwertsignal und Sollwertsignal als Regelabweichungs signal aufgeschaltet ist und welcher ein zweites Stellsignal liefert,

(e) einen zweiten Momentengeber, der von dem zweiten Stellsignal des zweiten Reglers beaufschlagt ist,

(f) ein Untersetzungsgetriebe, dessen Eingangsglied mit dem Rotor des zweiten Momentengebers verbunden ist, und dessen Ausgangsglied mit dem drehbeweglichen Element in Antriebsverbindung steht, und

(g) Mittel zum mechanischen und/oder signalmäßigen Verknüpfen der Regelkreise der beiden Regler derart, daß der zweite Momentengeber über das Getriebe eine Grobeinstellung des zu positionierenden Elements mit relativ großem Drehmoment und der zweite Momentengeber nach einer solchen Grobeinstellung eine Feineinstellung bewirkt.

Erfindungsgemäß werden somit zwei Momentengeber vorgesehen. Ein Momentengeber arbeitet über ein Untersetzungsgetriebe mit relativ großem Drehmoment. Ein anderer Momentengeber ist direkt mit dem drehbeweglichen Element verbunden. Durch geeignete Verknüpfung der Regelkreise der den beiden Momentengebern zugeordneten Regler wird sichergestellt, daß der Momentengeber mit dem Untersetzungsgetriebe eine Grobpositionierung bewirkt, während der direkt mit dem drehbeweglichen Element verbundene Momentengeber eine Feinpositionierung vornimmt und die Momentengeber sich dabei nicht stören sondern unterstützen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1 zeigt schematisch den mechanischen Aufbau eines Stellantriebs mit einem ersten, direkt mit einem drehbeweglichen Element verbundenen Momentengeber und einem zweiten Momentengeber, der mit dem drehbeweglichen Element über ein Untersetzungsgetriebe und eine Drehfeder in Antriebsverbindung steht.

Fig.2 ist ein Blockdiagramm und veranschaulicht das Prinzip des Stellantriebs.

Fig.3 ist ein Blockdiagramm ähnlich Fig.2 und zeigt im einzelnen die Struktur eines Modells des Stellantriebs mit den zwei Regelkreisen und der Verknüpfung dieser Regelkreise.

Fig.4 zeigt die Abhängigkeit eines Grenzwertes eines adaptiven Begrenzers in Fig.3 von der Regelabweichung

## Bevorzugte Ausführung der Erfindung

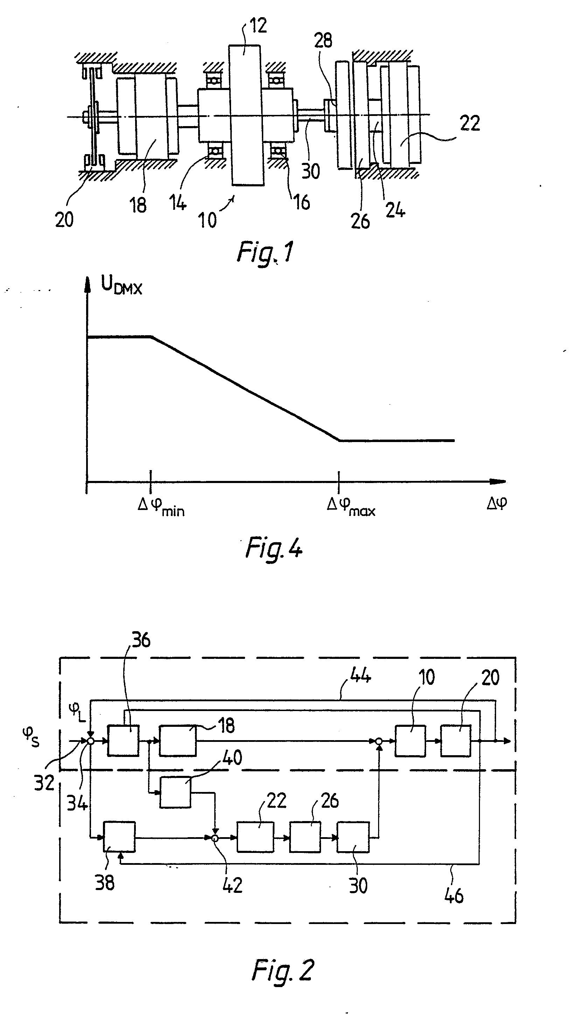

In Fig.1 ist mit 10 ein drehbewegliches Element bezeichnet, das hier als eine Schwungmasse 12 dargestellt ist, die in Lagern 14 und 16 gelagert ist. Das drehbewegliche Element ist einmal direkt mit dem Rotor eines ersten Momentengebers 18 verbunden. Mit diesem Rotor und damit mit dem drehbeweglichen Element ist ein Winkelabgriff 20 verbunden. Ein zweiter Momentengeber 22 ist mit dem Eingangsglied 24 eines Untersetzungsgetriebes 26 verbunden. Das Ausgangsglied 28 ist über ein federelastisches Koppelglied 30 ebenfalls mit dem zu positionierenden drehbeweglichen Element 10 verbunden.

In Fig.2 ist das Prinzip des Stellantriebs einschließlich der Regler als Blockschaltbild dargestellt. An einen Eingang 32 wird ein Sollwertsignal $\phi_S$ angelegt, das eine gewünschte Position repräsentiert. Dieses Sollwertsignal ist an einem Reglereingang 34, der hier als Summationspunkt dargestellt ist, einem Istwertsignal $\phi_L$ entgegengeschaltet. Das Istwertsignal $\phi_L$ wird von dem Winkelabgriff 20 geliefert. Die Differenz von Sollwertsignal und Istwertsignal wird als Regelabweichungssignal einmal auf einen ersten Regler 36 und zum anderen auf einen zweiten Regler 38 gegeben. Der erste Regler 36 liefert ein erstes Stellsignal das auf den ersten Momentengeber 18 geschaltet ist. Der erste Momentengeber 18 ist unmittelbar mit dem drehbeweglichen Element 10 verbunden. Das drehbewegliche Element 10 ist wiederum mit dem Winkelabgriff 20 verbunden. Der zweite Regler 38 liefert ein zweites Stellsignal. Dieses zweite Stellsignal ist auf den zweiten Momentengeber 22 geschaltet. Der zweite Momentengeber 22 ist mit dem Untersetzungsgetriebe 26 verbunden. Das Untersetzungsgetriebe 26 ist wiederum über das federelastische Koppelglied 30 ebenfalls mit dem drehbeweglichen Element 10 verbunden. Über einen Koppelzweig 40 erzeugt das an dem ersten Momentengeber 18 anliegende Stellsignal ein Signal, das in einem Summationspunkt 42 dem Stellsignal des zweiten Reglers 38 am Eingang des zweiten Momentengebers 22 überlagert ist. Von der Bewegung des drehbeweglichen Elements 10 werden Winkelgeschwindigkeitssignale $\dot{\phi}_L$ abgeleitet und, wie durch die Verbindungen 44 und 46 dargestellt ist, als Rückführung auf die Regler 36 bzw. 38 aufgeschaltet.

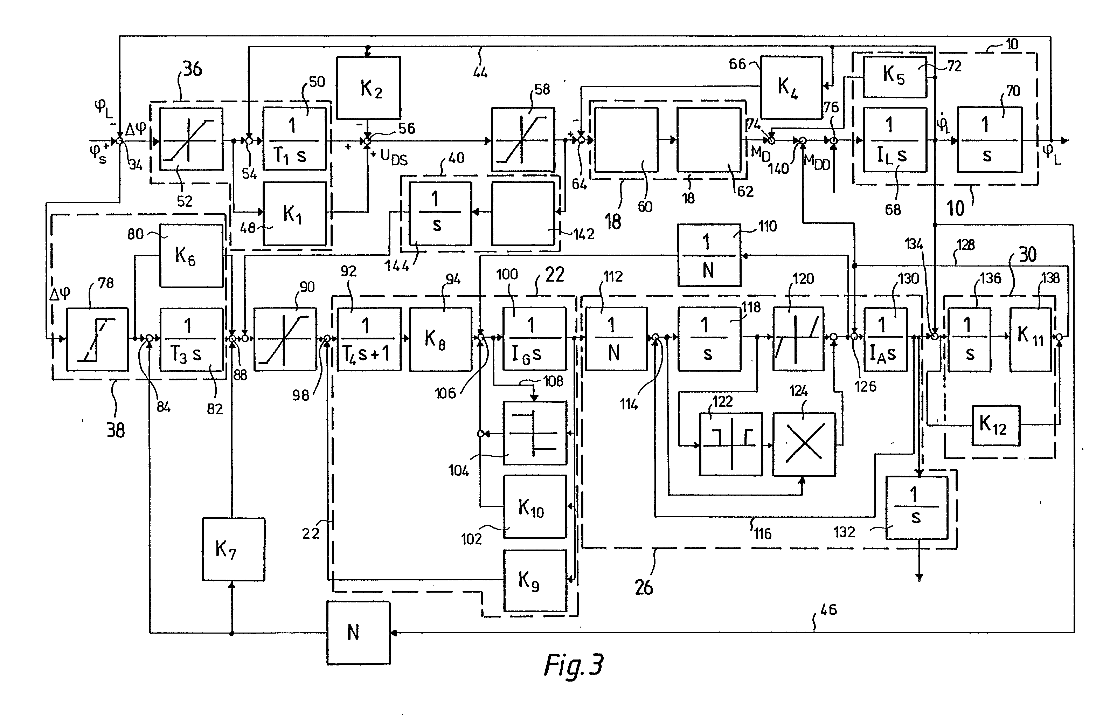

In Fig.3 ist ein Modell des Systems im einzelnen dargestellt.

Der erste Regler 36 ist ein PI-Regler mit einem durch Block 48 dargestellten P-Kanal mit einem Übertragungsfaktor $K_1$ und einem durch Block 50 dargestellten I-Kanal mit einer Übertragungsfunktion $1/T_1 s$. Am Eingang des Reglers 36 liegt ein Begrenzer 52, dessen Funktion es ist, übermäßig große Signale zu unterdrücken. Ein der Winkelgeschwindigkeit $\dot{\phi}_L$ entsprechendes Signal ist über einen Summationspunkt 54 auf den Eingang des I-Kanals geschaltet. Die Ausgänge des I-Kanals 48 und des P-Kanals 50 werden in einem Summationspunkt 56 addiert. Außerdem ist in dem Summationspunkt 56 ein Rückführsignal proportional der Winkelgeschwindigkeit multipliziert mit einem Übertragungsfaktor $K_2$ überlagert. Der Regler 36 liefert daraus ein Stellsignal $U_{DS}$.

Das Stellsignal $U_{DS}$ des ersten Reglers 36 ist auf einen adaptiven Begrenzer 58 geschaltet. Der adaptive Begrenzer 58 begrenzt das Stellsignal $U_{DS}$ auf einen Grenzwert $U_{DMX}$. Wenn das Stellsignal unter diesem Grenzwert liegt, wird es durch den Begrenzer durchgelassen. Wenn es über dem Grenzwert liegt, wird es auf den Grenzwert $U_{DMX}$ begrenzt. Der Grenzwert $U_{DMX}$ ist wiederum von der Regelabweichung abhängig: Je größer die Regelabweichung ist, desto kleiner ist der Grenzwert des adaptiven Begrenzers. Das ist in Fig.4 dargestellt. Am Ausgang des adaptiven Begrenzers 58 erscheint ein begrenztes Stellsignal $U_{DL}$.

Dieses begrenzte Stellsignal ist auf den ersten Momentengeber 18 aufgeschaltet. Der erste Momentengeber 18 kann durch ein Zeitglied 60 mit einer Übertragungsfunktion von der Form $1/(T_2s + 1)$ und eine Konstante $K_3$ dargestellt werden. Die Konstante $K_3$ ist durch einen Block 62 repräsentiert. Zur Darstellung des Momentengebers 18 muß noch die Winkelgeschwindigkeit $\dot{\phi}_L$ multipliziert mit einem Faktor $K_4$ berücksichtigt werden, die in einem Summationspunkt 64 dem begrenzten Stellsignal mit negativem Vorzeichen überlagert wird. Der Faktor $K_4$ ist durch einen Block 66 dargestellt. Diese Rückführung stellt die durch eine Bewegung des Rotors des Momentengebers 18 induzierte Gegenspannung dar. Der Momentengeber 18 liefert ein Drehmoment $M_D$, das direkt an dem drehbeweglichen Element 10 wirksam wird.

Das drehbewegliche Element 10 kann im Modell durch zwei Integrationen dargestellt werden: Eine erste Integration mit einer Übertragungsfunktion $1/l_Ls$ ist durch Block 68 repräsentiert und liefert die Winkelgeschwindigkeit $\dot{\phi}_L$ des drehbeweglichen Gliedes 10. Dabei ist $l_L$ das Trägheitsmoment des drehbeweglichen Gliedes 10. Eine zweite Integration mit einer Übertragungsfunktion $1/s$, dargestellt durch Block 70, liefert die Position $\phi_L$ des drehbeweglichen Gliedes 10.

Dem von dem Momentengeber erzeugten Drehmoment $M_D$ wirkt noch ein der Winkelgeschwindigkeit proportionales Moment entgegen, das durch die viskose Reibung hervorgerufen ist. Das ist durch den Block 72 mit einem Übertragungsfaktor $K_5$ repräsentiert. Das durch die Reibung hervorgerufene Drehmoment wird in der Blockdarstellung in einem Summationspunkt 74 mit negativem Vorzeichen dem Stellmoment $M_D$ "überlagert". In einem Summationspunkt 76 werden am Eingang des Blocks 68 Störmomente $M_S$ überlagert.

Der zweite Regler 38 hat die gleiche Struktur wie der erste Regler 36. Am Reglereingang liegt ein Begrenzer 78, der extreme Regelabweichungen begrenzt. Der Regler 38 hat einen P-Kanal 80 mit einem Übertragungsfaktor $K_6$ und einen I-Kanal 82 mit einer Übertragungsfunktion $1/T_3s$. Ähnlich wie bei dem ersten Regler 36 liegt am Eingang des I-Kanals die mit dem Untersetzungsfaktor N des Untersetzungsgetriebes multiplizierte Winkelgeschwindigkeit $\dot{\phi}_L$, die in einem Summationspunkt 84 dem Regelabweichungssignal überlagert wird. Die beiden Kanäle 80 und 82 sind auf einen Summationspunkt 88 geschaltet. An dem Summationspunkt 88 wird mit negativem Vorzeichen die Winkelgeschwindigkeit $\dot{\phi}_L$ multipliziert mit einem Übertragungsfaktor $K_7$ als Rückführsignal überlagert. An dem Summationspunkt 88 ergibt sich dann das zweite Stellsignal $U_{GS}$ von dem zweiten Regler 38.

Dieses Stellsignal $U_{GS}$ ist über einen Begrenzer 90 auf den Momentengeber geschaltet. Der Begrenzer 90 hat lediglich die Funktion, übermäßige Stellsignale zu begrenzen. Seine Funktion entspricht nicht der des adaptiven Begrenzers 58, wie noch erläutert werden wird. Der Momentengeber 22 kann im Modell wieder dargestellt werden durch ein Zeitglied 92 mit einer Übertragungsfunktion von der Form $1/(T_4s + 1)$ und einen konstanten Übertragungsfaktor $K_8$, der durch Block 94 repräsentiert ist. Am Eingang des Zeitgliedes 92 ist dem Stellsignal $U_{GS}$ die Ausgangs - Winkelgeschwindigkeit $\dot{\phi}_G$ des zweiten Momentengebers 22 multipliziert mit einem Übertragungsfaktor $K_9$ mit negativem Vorzeichen überlagert. Der Übertragungsfaktor $K_9$ ist durch einen Block 96 dargestellt. Die Überlagerung erfolgt in einem Summationspunkt 98. Diese "Rückführung" stellt wieder die bei einer Drehbewegung des Momentengebers 22 induzierte Gegenspannung dar. Block 100 mit der Übertragungsfunktion $1/l_{GS}$ stellt die Umsetzung des Drehmoments $M_G$ des Momentengebers 22 in eine Winkelgeschwindigkeit $\dot{\phi}_G$ dar.

$l_G$ ist dabei das Trägheitsmoment des Rotors des Momentengebers 22. Blöcke 102 und 104 repräsentieren Dämpfung und mechanische Reibung des zweiten Momentengebers 22. Sie liefern Drehmomente, die an einem Summationspunkt 106 dem vom Momentengeber 22 erzeugten Drehmoment $M_G$ entgegenwirken. Die Dämpfung ist proportional der Winkelgeschwindigkeit $\dot{\phi}_G$ mit einem Übertragungsfaktor $K_{10}$. Die mechanische Reibung des Momentengebers ist proportional dem wirksamen resultierenden Drehmoment, wie durch die Verbindung 108 angedeutet ist, und abhängig von der Drehrichtung, also vom Vorzeichen der Winkelgeschwindigkeit $_G$. Das ist durch die in Block 104 eingezeichnete Funktion symbolisiert.

Ein weiteres am Momentengeber 22 wirksames Drehmoment ist das Gegenmoment, das von dem Momentengeber über das Untersetzungsgetriebe 26 zu überwinden ist. Das ist das Ausgangsdrehmoment $M_{GG}$ des Untersetzungsgetriebes, allerdings dividiert durch das Untersetzungsverhältnis N. Das ist durch den Zweig mit Block 110 dargestellt.

Das Untersetzungsgetriebe 26 bewirkt eine Untersetzung der Winkelgeschwindigkeit $\dot{\phi}_G$ mit einem Faktor N. Das ist durch Block 112 dargestellt. Es ergibt sich eine untersetzte Winkelgeschwindigkeit $\dot{\phi}_{GU}$ Zur Darstellung der realen Eigenschaften des Untersetzungsgetriebes 26 wird die Differenz gebildet zwischen der durch N geteilten Winkelge-

schwindigkeit $\dot{\phi}_G$ des Momentengebers 22 und der tatsächlichen Ausgangs - Winkelgeschwindigkeit $\dot{\phi}_A$ des Untersetzungsgetriebes 26. Wenn diese Winkelgeschwindigkeiten gleich sind, weil etwa die Abtriebswelle des Untersetzungsgetriebes mit der gleichen Winkelgeschwindigkeit angetrieben wird, tritt in dem Untersetzungsgetriebe 26 keine Lose und keine Haftreibung auf. Das Unter setzungsgetriebe 26 überträgt auch kein Drehmoment. Deshalb wird im Modell in dem Summationspunkt 114 die Differenz der durch N geteilten Winkelgeschwindigkeit $\dot{\phi}_G$ des Momentengebers und der über Verbindung 116 "rückgeführten" Ausgangs - Winkelgeschwindigkeit $\dot{\phi}_A$ gebildet. Aus der Differenz der Winkelgeschwindigkeiten ergibt sich durch Integration, dargestellt durch Block 118 mit der Übertragungsfunktion 1/s, eine Winkeldifferenz $\Delta\phi_G$. Das ist eine Verwindung des Untersetzungsgetriebes 26, die zu einem Ausgangsdrehmoment $M_{GG}$ führt. Wie durch Block 120 dargestellt ist, führt infolge der Lose eine bestimmte Verwindung noch nicht zu einem Ausgangsdrehmoment. Erst bei Erreichen eines bestimmten Wertes der Verwindung ist die Lose aufgenommen und es wird dann ein Ausgangsdrehmoment wirksam. Das ist durch die Funktion in Block 120 angedeutet. Weiterhin ist die elastische Verformung zu beachten. Diese ist dargestellt durch Block 122 und Multiplizierglied 124. Block 122 liefert, wie die darin angedeutete Funktion zeigt, einen konstanten "Ausgang", wenn die Verwindung nach der einen oder der anderen Richtung einen vorgegebenen, durch die Lose bestimmten Wert überschreitet. Das dann abgegebene Drehmoment ist proportional der Differenz $\Delta\dot{\phi}_G$ der Winkelgeschwindigkeiten. Dem Drehmoment $M_{GG}$ wirkt entgegen das an dem federelastischen Koppelglied 30 auftretende Drehmoment $M_{FG}$. Das ist durch einen Summationspunkt 126 dargestellt, auf den über Verbindung 128 das Drehmoment von dem Koppelglied 30 aufgeschaltet" ist. Das so erhaltene Drehmoment wirkt auf das Trägheitsmoment $I_A$ der Zwischenmasse des Untersetzungsgetriebes und liefert durch Integration mit der Übertragungsfunktion $1/I_A s$ die Ausgangs - Winkelgeschwindigkeit $\dot{\phi}_A$. Das ist durch Block 130 dargestellt.

Aus der Winkelgeschwindigkeit ergibt sich durch Integration der Winkel $\phi_A$ am Ausgang des Untersetzungsgetriebes, wie durch Block 132 dargestellt ist. Das federelastische Koppelglied 30 ist an einem Ende mit dem zu positionierenden, drehbeweglichen Element und an dem anderen Ende mit der Ausgangswelle des Untersetzungsgetriebes verbunden. Die Differenz $\Delta\dot{\phi}_A$ der Winkelgeschwindigkeiten des zu positionierenden Elements 10 und der Ausgangswelle des Untersetzungsgetriebes 26 wird in dem Modell in einem Summationspunkt 134 gebildet. Durch Integration in Block 136 mit der Übertragungsfunktion 1/s ergibt sich die Differenz $\Delta\phi_A$ der Lagewinkel, also die Torsion des federelastischen Koppelglieds 30. Nach der Federcharakteristik, die durch einen Block 138 mit einer Konstanten $K_{11}$ dargestellt ist, ergibt sich ein an dem federelastischen Koppelglied 30 wirksames Drehmoment $M_{FC}$. Diesem Drehmoment $M_{FC}$ ist ein Drehmoment $M_{FD}$ überlagert, das der Änderung des Torsionswinkels mit einem Faktor $K_{12}$ (dargestellt durch einen Block 139) proportional ist und die Dämpfung des Koppelgliedes 30 darstellt. Es ergibt sich ein resultierendes Drehmoment $M_{FG}$ = $M_{FC}$ + $M_{FD}$, das im Modell an einem Summationspunkt 141 gebildet wird.

Dieses Drehmoment $M_{FG}$ ist in einem Summationspunkt 140 dem durch das Dämpfungsmoment korrigierten Drehmoment $M_D$ des ersten Momentengebers 18 überlagert. Das tordierte, federelastische Koppelglied 30 greift ebenfalls an dem zu positionierenden, drehbeweglichen Element 10 an.

Das durch den adaptiven Begrenzer 58 begrenzte Stellsignal $U_{DS}$ erzeugt über den Koppelzweig 40 ein Signal am Eingang des zweiten Momentengebers 22. Der Koppelzweig 40 enthält ein Tiefpaßfilter 142 und einen Integrator 144.

Das beschriebene Modell gibt die Funktion der Regler mit dem Koppelzweig sowie der Momentengeber, des Unter setzungsgetriebes und des federelastischen Koppelgliedes wieder. Die anhand dieses Modells beschriebene Anordnung arbeitet wie folgt:

Bei großen Regelabweichungen ist gemäß der Charakteristik des adaptiven Begrenzers, die in Fig.4 dargestellt ist, das Stellsignal des ersten Reglers 36 sehr stark begrenzt. Der erste Regler 36 ist praktisch nicht wirksam. Dadurch wird verhindert, daß der erste Regler, der infolge seiner größeren Bandbreite sehr schnell reagiert, bei großen Regelabweichungen ein ein großes Drehmoment aufbaut. Ein solches Drehmoment würde von dem zweiten Regler 38 als Störmoment aufgefaßt werden. Der zweite Regler würde diesem vermeintlichen Störmoment entgegenzuwirken suchen. Die beiden Momentengeber würden gegeneinanderarbeiten, wodurch wegen des Untersetzungsgetriebes, das dem zweiten Momentengeber nachgeschaltet ist, in dem ersten Momentengeber ein starker Strom im Dauerbetrieb auftreten würde.

Die Stellbewegung wird daher zunächst von dem zweiten Regler 38 und dem zweiten Momentengeber 22 mit dem nachgeschalteten Untersetzungsgetriebe 26 übernommen. Erst bei Erreichen kleiner Regelabweichungen wird der erste Regler 36 mit dem ersten Momentengeber 18, der direkt mit dem zu positionierenden beweglichen Element 10 gekuppelt ist, aktiv. Die Grenzwerte des adaptive Begrenzers 58 wachsen an, und es tritt sehr schnell ein Drehmoment an dem ersten Momentengeber 18 auf. Damit kann der erste Momentengeber 18 die Feinpositionierung des drehbeweglichen Elements 10 vornehmen. Das kann der erste Momentengeber 18 auch dann, wenn der zweite Momentengeber 22 infolge von Reibung oder Lose schon bei einer endlichen kleinen Regelabweichung stehenbleibt. Der erste Momentengeber 18 braucht dabei nicht gegen den zweiten Momentengeber 22 und das Untersetzungsgetriebe 26 zu arbeiten. Vielmehr bewirkt er eine drehmomentproportionale Torsion des federelastischen Koppelgliedes 30.

Solange an dem ersten Momentengeber 18 ein Stellsignal vom Regler 36 über den adaptiven Begrenzer anliegt, baut sich über den Koppelzweig 40 mit dem Integrator 144 am Eingang des zweiten Momentengebers 22 ein Signal auf, das schließlich eine Nachstellbewegung des zweiten Momentengebers 22 hervorruft, derart, daß das zu positionierende, drehbewegliche Element 10 in die durch das Sollwertsignal vorgegebene Position eingedreht wird. Dieser Koppelzweig verhindert ein Gegeneinanderarbeiten der beiden Momentengeber 18 und 22. Es wird dadurch vielmehr bewirkt, daß der Arbeitspunkt des ersten Momentengebers 18 durch eine "Trimmung" mittels des zweiten Momentengebers 22 auf den Sollwert gelegt wird.

Das Tiefpaßfilter 142 soll den Einfluß höherfrequenter Störungen unterdrücken.

Dadurch, daß der Koppelzweig 40 hinter dem adaptiven Begrenzer 58 abzweigt, wird sichergestellt, daß der zweite Momentengeber 22 von dem Stellsignal des ersten Reglers 36 praktisch nicht beeinflußt wird, solange die Regelabweichung noch groß ist, also während der Grobregelung.

An dem Eingang des adaptiven Begrenzers 58 sollen nicht unerwünscht große Signale dadurch erzeugt werden, daß im Verlaufe eines Einstellvorganges für längere Zeit eine größere Regelabweichung ansteht, die sich durch den I-Kanal 50 des Reglers 36 aufintegriert. Deshalb wird der I-Kanal 50 des ersten Reglers 36 abgeschaltet, solange die Regelabweichung einen vorgegebenen Wert überschreitet, also beispielsweise solange der Grenzwert des adaptiven Begrenzers 58 auf den Minimalwert beschränkt ist.

## Ansprüche

1. Stellantrieb zum Einstellen eines drehbeweglichen Elements (10) auf eine durch ein Sollwertsignal vorgegebene Stellung, **gekennzeichnet durch die Kombination von**

(a) einem Winkelabgriff (20), der ein die Stellung des drehbeweglichen Elements (10) wiedergebendes Istwertsignal liefert,

(b) einem ersten Regler (36), auf welchen die Differenz von Istwertsignal und Sollwertsignal als Regelabweichungssignal aufgeschaltet ist und welcher ein erstes Stellsignal liefert,

(c) einem ersten Momentengeber (18),
-- dessen Rotor unmittelbar mit dem drehbeweglichen Element (10) verbunden ist und
-- der von dem ersten Stellsignal des ersten Reglers (36) beaufschlagt ist,

(d) einem zweiten Regler (38), auf welchen die Differenz von Istwertsignal und Sollwertsignal als Regelabweichungssignal aufgeschaltet ist und welcher ein zweites Stellsignal liefert,

(e) einen zweiten Momentengeber (22), der von dem zweiten Stellsignal des zweiten Reglers (38) beaufschlagt ist,

(f) ein Untersetzungsgetriebe (26), dessen Eingangsglied (24) mit dem Rotor des zweiten Momentengebers (22) verbunden ist, und dessen Ausgangsglied (28) mit dem drehbeweglichen Element (10) in Antriebsverbindung steht, und

(g) Mittel (30,40,58) zum mechanischen und/oder signalmäßigen Verknüpfen der Regelkreise der beiden Regler (36,38) derart, daß der zweite Momentengeber (22) über das Getriebe (26) eine Grobeinstellung des zu positionierenden Elements (10) mit relativ großem Drehmoment und der erste Momentengeber nach einer solchen Grobeinstellung eine Feineinstellung bewirkt.

2. Stellantrieb nach Anspruch 1, **dadurch gekennzeichnet, daß** ein federelastisches Koppelglied (30) einerseits mit dem Untersetzungsgetriebe (26) und andererseits mit dem drehbeweglichen Element (10) verbunden ist.

3. Stellantrieb nach Anspruch 1 oder 2, **dadurch gekennzeichnet, daß** der erste Regler (36) einen vom Regelabweichungssignal gesteuerten adaptiven Begrenzer (58) enthält, durch den das erste Stellsignal auf einen Maximalwert begrenzt ist, der mit steigender Regelabweichung bis zu einem Minimalwert vermindert wird.

4. Stellantrieb nach einem der Ansprüche 1 bis 3, **dadurch gekennzeichnet, daß** das Stellsignal des ersten Reglers (36) über einen Koppelzweig (40) das Eingangssignal des zweiten Momentengebers (22) so beeinflußt, daß der zweite Momentengeber (22) ein Drehmoment aufbaut, bis das erste Stellsignal verschwindet.

5. Stellantrieb nach Anspruch 4, **dadurch gekennzeichnet, daß** der Koppelzweig (40) einen Integrator (144) enthält.

6. Stellantrieb nach Anspruch 5, **dadurch gekennzeichnet, daß** der Koppelzweig (40) zusätzlich ein Tiefpaßfilter 142) enthält.

7. Stellantrieb nach den Ansprüchen 3 und 4, **dadurch gekennzeichnet, daß** der Koppelzweig (40) hinter dem adaptiven Begrenzer (58) abzweigt.

8. Stellantrieb nach einem der Ansprüche 1 bis 7, **dadurch gekennzeichnet, daß** der erste und der zweite Regler (36,38) PI-Regler sind.

9. Stellantrieb nach Anspruch 8, **dadurch gekennzeichnet, daß** der erste Regler (36) eine wesentlich größere Bandbreite besitzt als der zweite Regler (38).

10. Stellantrieb nach Anspruch 8 oder 9, **dadurch gekennzeichnet, daß** der I-Kanal (50) des ersten Reglers (36) abgeschaltet ist, solange das Regelabweichungssignal einen vorgegebenen Wert überschreitet.

Fig. 1

Fig. 4

Fig. 2

Fig.3

EP 0 340 627 A2